Europäisches Patentamt

European Patent Office

Office européen des brevets

(11) Numéro de publication : **0 349 379 B1**

## FASCICULE DE BREVET EUROPEEN

(12)

(45) Date de publication du fascicule du brevet :
**19.11.92 Bulletin 92/47**

(21) Numéro de dépôt : **89401730.0**

(22) Date de dépôt : **19.06.89**

(51) Int. Cl.⁵ : **G21C 7/10**

(54) **Grappe de réglage à crayons démontables pour assemblage combustible nucléaire.**

(30) Priorité : **28.06.88 FR 8808674**

(43) Date de publication de la demande :
**03.01.90 Bulletin 90/01**

(45) Mention de la délivrance du brevet :
**19.11.92 Bulletin 92/47**

(84) Etats contractants désignés :
**BE DE ES SE**

(56) Documents cités :
**EP-A- 0 159 509
EP-A- 0 169 421
EP-A- 0 249 544
GB-A- 2 077 483**

(73) Titulaire : **FRAMATOME**
**Tour Fiat 1, Place de la Coupole**
**F-92400 Courbevoie (FR)**
Titulaire : **COGEMA**
**2, rue Paul Dautier**
**F-78141 Velizy Villacoublay (FR)**

(72) Inventeur : **Denizou, Jean-Pierre**
**102 Voie Romaine**
**F-69290 Craponne (FR)**

(74) Mandataire : **Bouget, Lucien et al**
**Cabinet Lavoix 2, Place d'Estienne d'Orves**
**F-75441 Paris Cédex 09 (FR)**

## Description

L'invention concerne une grappe de réglage à crayons démontables dont la partie active peut être introduite dans les tubes de guidage d'un assemblage combustible d'un réacteur nucléaire.

Le coeur des réacteurs nucléaires refroidis a l'eau légère et en particulier des réacteurs nucléaires refroidis par de l'eau sous pression est constitué par des assemblages de forme prismatique juxtaposés et constitués sous la forme de faisceaux de crayons combustibles entre lesquels sont placés, dans des positions déterminées, des tubes de guidage dans lesquels on déplace, lorsque le réacteur est en service, des moyens de réglage de la réaction nucléaire. Les crayons combustibles et les tubes de guidage sont dans une position verticale, dans le coeur du réacteur.

On utilise des grappes comportant une pluralité de crayons parallèles qui constituent les moyens de réglage de la réaction nucléaire, lorsqu'ils sont introduits plus ou moins profondément dans les tubes de guidage.

Chacune des grappes de réglage utilisées pour la conduite du réacteur est associée à un assemblage combustible, les crayons de cette grappe étant disposés suivant un réseau correspondant aux tubes-guides de l'assemblage. Les grappes de guidage comportent un croisillon ou araignée comprenant plusieurs ailettes réparties angulairement autour de l'axe de la grappe et un manchon central qui permet de relier la grappe à une tige de manoeuvre ou prolongateur permettant de déplacer la grappe dans le coeur. Chacune des ailettes de l'araignée comporte au moins un fourreau ayant un alésage permettant la fixation d'un crayon sur l'araignée. Les crayons comportent une partie active fermée à ses extrémités par des bouchons et prolongée d'un côté par une tige qui vient s'engager dans l'alésage du fourreau, de direction longitudinale, pour assurer la fixation du crayon sur la grappe.

Les grappes de réglage du réacteur ont des fonctions bien déterminées, suivant la nature des crayons constituant ces grappes.

Certaines grappes permettent de régler la réactivité pendant tout le fonctionnement du réacteur et en particulier de faire varier sa puissance. D'autres grappes contiennent un poison consommable et sont introduites dans le coeur uniquement pendant le premier cycle de fonctionnement de ce coeur ; dans d'autres grappes, les crayons constituent simplement des bouchons destinés à obturer les tubes-guides des assemblages pour limiter le débit de réfrigérant circulant dans l'assemblage sans entrer en contact avec les crayons combustibles ; d'autres grappes enfin permettent d'effectuer une variation du spectre neutronique du coeur par modification du volume de modérateur dans le coeur.

Il est bien évident qu'il est avantageux de réaliser les moyens de fixation de la partie d'extrémité des crayons sur l'araignée, de manière que ces crayons restent démontables, dans le cas d'une usure excessive, d'une rupture ou d'une détérioration. On évite ainsi la nécessité d'avoir à effectuer un changement complet de la grappe. Cependant, les éléments de fixation des crayons sur l'araignée doivent présenter une grande sûreté en service et interdire toute séparation accidentelle du crayon et de l'araignée, par exemple sous l'effet des vibrations dans le coeur du réacteur.

On a donc proposé des dispositifs et des procédés de fixation démontable de crayons sur des grappes de réglage qui diminuent théoriquement les risques de séparation accidentelle du crayon et de l'araignée en service.

Dans le brevet FR-A-2.439.457, on décrit un procédé de mise en place et de retrait de crayons d'une grappe de réglage et le dispositif de fixation correspondant. Le bouchon obturant le crayon dans sa partie d'extrémité destinée à être assemblée à l'araignée est prolongé par une virole déformable dont on réalise l'expansion diamétrale à l'intérieur de l'alésage du fourreau de l'araignée pour assurer la fixation du crayon.

Le crayon peut être démonté en exerçant une force de direction longitudinale sur le bouchon, de façon à rétreindre la virole et à permettre son passage dans l'alésage du fourreau.

Pour réaliser la fixation et le démontage du crayon, le bouchon et la virole qui le prolonge doivent être accessibles par l'extrémité du fourreau opposée à l'extrémité par laquelle est engagé le crayon. Les fourreaux de l'araignée doivent donc traverser les ailettes de part en part, ce qui présente des inconvénients et correspond à un type d'araignée particulier.

De plus, lors de la mise en place ou du retrait d'un crayon, on prend appui en force sur l'alésage du fourreau correspondant. Ces opérations peuvent entraîner des déformations de l'alésage, si bien qu'il est nécessaire d'effectuer des retouches ou réusinages sur l'araignée, de manière plus ou moins fréquente, dans le cas où on effectue un grand nombre de remplacements de crayons. Ces opérations de retouche ou réusinage sont relativement complexes, dans la mesure où la grappe a été activée sous l'effet du bombardement des neutrons, lors de son séjour dans le coeur du réacteur nucléaire.

D'autre part, la déformation du métal constituant la virole à l'extrémité du crayon produit une certaine fragilisation, dans la mesure où les efforts appliqués lors de la déformation ne sont pas toujours aisément contrôlables. Cette fragilisation peut conduire à une séparation accidentelle entre le crayon et l'araignée, sous l'effet des vibrations auxquelles est soumis le crayon dans le réacteur en service.

En outre, le démontage du crayon nécessite d'exercer une force importante dans la direction longitudinale sur le bouchon pour pousser la partie d'extrémité du crayon à travers l'alésage. Dans le cas de l'apparition d'un grippage ou d'un point dur, il peut se produire des à-coups relativement importants, lors du démontage du crayon qui risquent d'engendrer l'apparition de fractures ou d'autres détériorations du crayon rendu particulièrement fragile par l'irradiation.

Dans le brevet EP-A-249 544 on a proposé un autre mode de fixation des crayons nécessitant également la présence de fourreaux dont les alésages traversent les ailettes de l'araignée de part en part.

La tige de fixation prolongeant le crayon est d'une longueur suffisante pour que sa partie d'extrémité soit saillante par rapport à l'extrémité supérieure du fourreau, lorsque le crayon est engagé en position d'assemblage dans ce fourreau. La partie supérieure saillante de la tige comporte un filetage sur lequel peut être engagé un bouchon creux taraudé venant en appui sur la partie supérieure du fourreau et assurant la fixation du crayon, lorsqu'il est vissé sur la partie filetée de la tige. La fixation peut être complétée en rendant l'assemblage indévissable sous l'effet des vibrations grâce à des éléments métalliques déformables solidaires de la tige qui peuvent être rabattus dans des cavités ménagées dans le bouchon creux.

Ce dispositif de fixation est tout-à-fait satisfaisant mais ne s'applique que dans le cas des araignées comportant des fourreaux dont les alésages traversent de part en part les ailettes dans lesquelles ils sont placés.

Un type plus courant de grappes de réglage comporte une araignée dont les fourreaux présentent des alésages borgnes filetés intérieurement sur une partie de leur longueur et par l'ouverture desquels on introduit la tige d'assemblage d'un crayon qui comporte une partie filetée qui est vissée dans la partie taraudée du fourreau. La tige d'assemblage est rendue indévissable sous l'effet des vibrations, en introduisant et en soudant une goupille à l'intérieur d'un logement réalisé en fin de vissage de la tige d'assemblage du crayon, par mise en coïncidence d'une ouverture traversant le fourreau et d'un trou borgne prévu dans une partie à grand diamètre de la tige d'assemblage constituant un anneau de centrage.

Ce mode de blocage en rotation du crayon est d'une mise en oeuvre difficile et délicate, ce qui complique les opérations de remplacement d'un crayon sur une grappe de réglage.

Le but de l'invention est donc de proposer une grappe de réglage à crayons démontables comportant un croisillon ou araignée constitué par une pluralité d'ailettes disposées angulairement les unes par rapport aux autres et comprenant chacune au moins un fourreau ayant un alésage borgne et taraudé sur une partie de sa longueur, dont l'axe correspond à la direction longitudinale de la grappe ainsi qu'un ensemble de crayons comportant chacun une partie active cylindrique et une partie d'extrémité destinée à être engagée et fixée dans l'alésage d'un fourreau de l'araignée et comprenant, dans le prolongement axial d'un bouchon de fermeture de la partie active, une tige filetée sur une partie de sa longueur, assurant le vissage de la tige dans l'alésage du fourreau correspondant, cette grappe de réglage permettant de simplifier les opérations de remplacement d'un crayon tout en assurant une fixation très sûre et une très bonne résistance aux sollicitations subies par la grappe de réglage dans le réacteur en service.

Dans ce but, pour chacun des crayons démontables :

- la partie d'extrémité du fourreau ouverte vers l'extérieur présente, sur une certaine longueur, un diamètre extérieur réduit et comporte au moins un logement sur sa paroi,
- la partie d'extrémité du crayon est solidaire d'une virole coaxiale au crayon et entourant la tige sur une partie de sa longueur correspondant à la partie de la tige engagée dans la partie à diamètre réduit du fourreau, la virole ayant un diamètre intérieur sensiblement égal au diamètre réduit du fourreau,
- une surface de prise est prévue sur la surface extérieure du crayon,

le blocage en rotation du crayon dans le fourreau étant assuré par déformation de la virole à l'intérieur des ouvertures de la partie d'extrémité du fourreau et le démontage, en exerçant un couple sur le crayon par l'intermédiaire de la surface prismatique, pour repousser les parties déformées de la virole.

Afin de bien faire comprendre l'invention, on va maintenant décrire à titre d'exemple non limitatif, en se référant aux figures jointes en annexe, un mode de réalisation d'une grappe de réglage à crayons démontables suivant l'invention destinée à un assemblage d'un réacteur nucléaire à eau sous pression.

La figure 1 est une vue en élévation avec coupe partielle d'une grappe de réglage selon l'art antérieur.

La figure 1A est une vue en coupe suivant A-A de la figure 1.

La figure 2 est une vue en élévation avec coupe partielle, d'une partie d'une grappe de réglage suivant l'invention.

La figure 3 est une vue en élévation et en coupe partielle à plus grande échelle d'un fourreau de la grappe de réglage représentée sur la figure 2.

La figure 4 est une vue en élévation avec coupe partielle de la partie d'extrémité d'un crayon d'une grappe de réglage suivant l'invention.

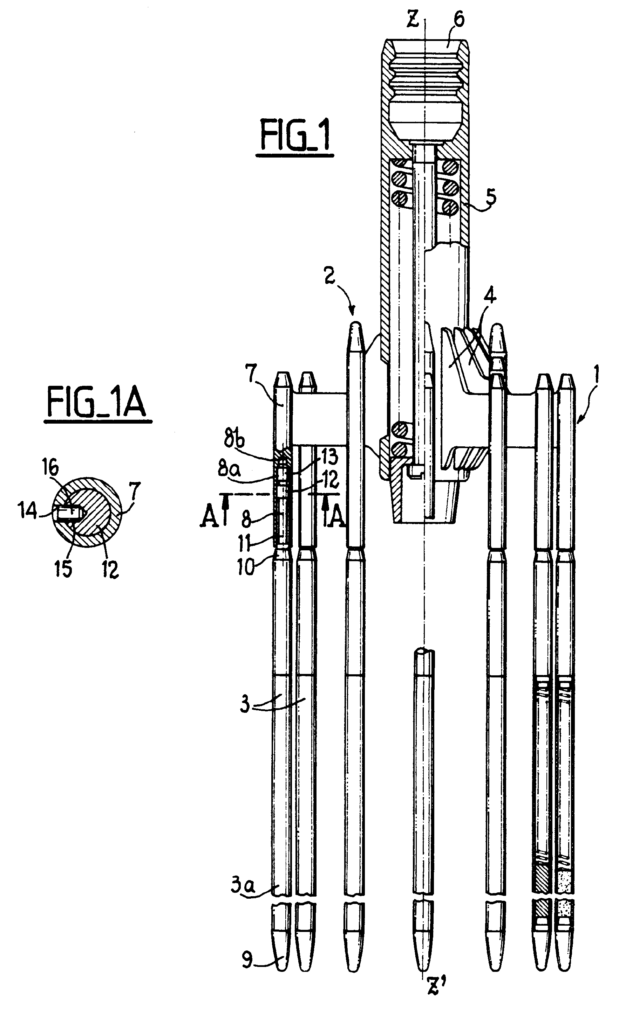

Sur la figure 1, on voit une grappe de réglage désignée de manière générale par le repère 1. La grappe de réglage 1 comporte un croisillon ou araignée 2 et un faisceau de crayons parallèles 3 qui peuvent être par exemple des crayons absorbants permettant de régler la puissance dans un assemblage du coeur du réacteur.

L'araignée 2 comporte une pluralité d'ailettes 4 régulièrement réparties angulairement autour de l'axe longitudinal ZZ' de la grappe et solidaires d'un manchon 5 permettant de relier la grappe de réglage 1 à une tige de manoeuvre. A cet effet, le manchon 5 comporte à sa partie supérieure un alésage 6 dans lequel on peut engager et fixer l'extrémité de la tige de manoeuvre de la grappe.

La partie d'extrémité de chacune des ailettes 4 opposée à l'extrémité de cette ailette reliée au manchon 5 constitue un fourreau 7 dont l'alésage intérieur 8 est dirigé suivant la direction axiale ZZ' de la grappe. L'alésage 8 est un alésage borgne qui comporte une partie filetée 8a juste en-dessous du fond de trou 8b à l'intérieur du manchon 7.

Chacun des crayons 3 comporte une partie active 3a constituée par un tube rempli de pastilles en matériau absorbant et fermé à ses extrémités par des bouchons 9 et 10.

La partie d'extrémité du crayon 3, au-dessus du bouchon supérieur 10, constitue la tige d'assemblage 11 du crayon qui est introduite dans l'alésage 8 du fourreau par son extrémité inférieure ouverte.

La tige 11 comporte une partie à grand diamètre 12 constituant une bague de centrage et de blocage en rotation et une partie filetée 13 qui est vissée dans la partie taraudée 8a de l'alésage 8, lors du montage du crayon 3. En fin de vissage, le bouchon 10 du crayon vient en appui sur l'extrémité ouverte du fourreau 7 et l'extrémité de la tige 11 en fond de trou 8b.

De plus, comme il est visible sur la figure 1A, en fin de vissage, une ouverture 14 traversant la paroi du fourreau 7 vient en coïncidence avec un trou borgne 15 usiné dans la bague de centrage 12 de la tige 11.

L'ouverture 14 et le trou borgne 15 constituent un logement pour une goupille 16 de blocage en rotation de la tige 11 et du crayon 3 par rapport au fourreau 7 de l'araignée. La fixation du crayon est complétée par soudage de l'extrémité de la goupille 16 à l'intérieur de l'ouverture 14 du fourreau.

Il est bien évident que ces opérations d'assemblage, de blocage et de soudage sont relativement complexes et nécessitent une mise en coïncidence parfaite des parties correspondantes de la tige 11 et du fourreau 7.

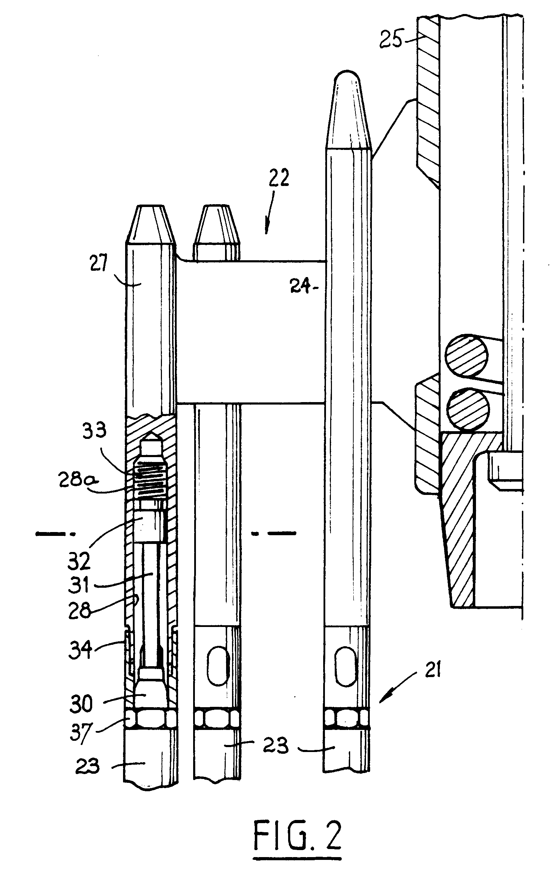

Sur la figure 2, on a représenté une partie d'une grappe de réglage selon l'invention désignée de manière générale par le repère 21.

La structure générale de la grappe suivant l'invention représentée sur la figure 2 est identique à la structure de la grappe suivant l'art antérieur représentée sur la figure 1. La grappe 21 comporte une araignée 22 dont les ailettes 24 sont fixées sur un manchon commun 25. Chacune des ailettes porte à son extrémité un manchon 27 comportant un alésage 28 dans lequel est engagé la partie d'extrémité d'un crayon 23 située au-dessus du bouchon supérieur 30. Cette partie d'extrémité du crayon 23 est constituée par une tige 31 assurant la fixation du crayon 23 sur l'araignée 22.

La tige 31 comporte une partie à grand diamètre 32 constituant un anneau de centrage de la tige 31 dans l'alésage 28. La tige 31 comporte également une partie filetée 33 qui est vissée sur une partie taraudée 28a de l'alésage 28 du fourreau 27.

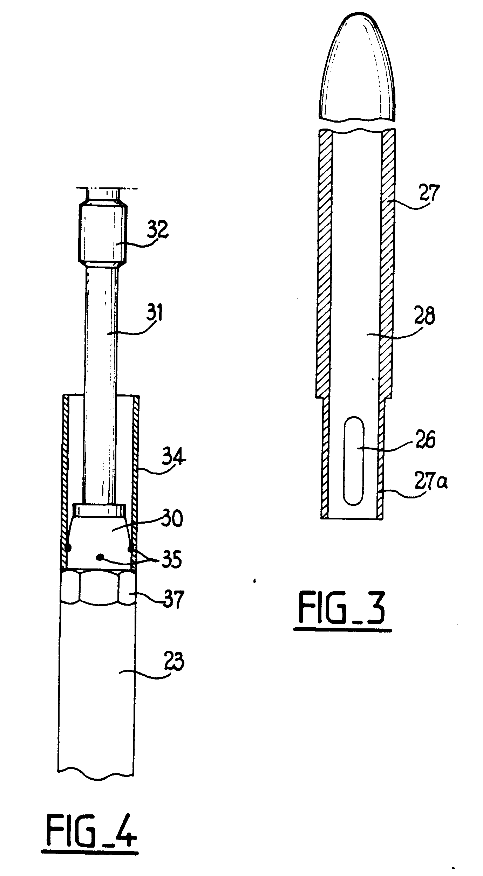

Le fourreau 27 et le crayon 23 comportent de plus des moyens complémentaires de blocage en rotation du crayon par rapport à l'araignée qui seront décrits en se référant aux figures 3 et 4.

Le fourreau 27 comporte une partie d'extrémité 27a à diamètre extérieur réduit, au voisinage de l'extrémité ouverte de l'alésage 28. De plus, dans cette partie 27a, le fourreau comporte un ensemble d'ouvertures oblongues 26 traversant sa paroi.

Comme il est visible sur la figure 4, le crayon 23 comporte un bouchon supérieur 30 dont le diamètre est très légèrement inférieur au diamètre courant du crayon dans sa partie active. Sur la partie à diamètre réduit du bouchon 30, une virole 34 est fixée par des points de soudure 35. La virole 34 est fixée de manière coaxiale par rapport au crayon 23 et entoure, sur une certaine hauteur, la partie inférieure de la tige d'assemblage 31 du crayon. La partie de la tige 31 entourée par la virole 34 correspond à la partie de cette tige qui vient à l'intérieur de la partie 27a du fourreau 27, lorsque le crayon est fixé sur l'araignée comme représenté sur la figure 2.

Le crayon comporte de plus, à la partie inférieure du bouchon 30, une surface de prise 37, par exemple de forme prismatique, permettant de mettre un outil de serrage tel qu'une clé en prise avec la surface extérieure du crayon. Lorsque la virole 34 est soudée sur le bouchon 30, cette virole 34 assure par son épaisseur une continuité de la surface extérieure du crayon.

Le montage d'un crayon 23 sur l'araignée 22 est réalisé, comme dans le cas du dispositif selon l'art antérieur représenté sur la figure 1, en introduisant la partie supérieure de la tige d'assemblage 31 dans l'ouverture inférieure du fourreau 27, puis en déplaçant le crayon 23 dans la direction axiale jusqu'au moment où la partie filetée 33 de la tige 31 vient en contact avec l'extrémité inférieure de la partie taraudée 28a de l'alésage 28. On effectue alors le vissage de la partie filetée 33 dans la partie taraudée 28a en faisant tourner le crayon autour de son axe. En fin de vissage, on effectue le blocage en rotation du crayon 23 par rapport au fourreau 27 en déformant localement la virole 34 de façon à repousser la paroi de cette virole à l'intérieur des lumières 26. Cette opération est évidemment beaucoup plus simple que celle consistant à introduire et à souder une goupille dans des ouvertures en coïncidence du fourreau et de la tige d'assemblage.

Pour démonter un crayon 23 dont on veut effectuer le remplacement, on immobilise l'ailette 24 de l'araignée portant le manchon 27 dans lequel est fixé le crayon 23. On utilise une clé coopérant avec la surface prismatique à base hexagonale 37 pour exercer un couple sur le crayon 23 susceptible de repousser les parties déformées de la virole 34 et de les faire sortir des lumières 26. Le démontage du crayon se poursuit par le dévissage de la partie filetée 33.

La grappe de réglage suivant l'invention présente donc l'avantage de permettre une fixation très sûre et très efficace des crayons par des opérations relativement simples mettant en oeuvre un outillage réduit. En particulier, il n'est pas nécessaire de disposer d'un outillage de soudage ou de brasage, dans la mesure où le blocage en rotation du crayon est effectué uniquement par déformation d'une virole.

D'autre part, le démontage des crayons est extrêmement aisé, puisqu'il suffit d'exercer un couple suffisant sur le crayon grâce à un moyen de serrage en prise avec une partie prismatique de ce crayon située au voisinage du bouchon. Cette opération n'engendre pas d'à-coups ou chocs.

En outre, le dispositif selon l'invention est particulièrement simple et peut être facilement adapté à des grappes de réglage existantes en effectuant un usinage complémentaire limité des fourreaux et des bouchons supérieurs des crayons. La fixation de viroles métalliques déformables sur la partie cylindrique du bouchon supérieur des crayons est également une opération très simple nécessitant uniquement quelques points de soudure.

L'invention ne se limite pas au mode de réalisation qui a été décrit.

On peut fixer la virole déformable sur le bouchon supérieur du crayon en utilisant une technique différente du soudage par point et par exemple toute technique de soudage ou de brasage appropriée. On peut également réaliser la virole par un usinage du bouchon en évidant sa partie interne sur une certaine hauteur. La virole peut être fixée sur le bouchon supérieur du crayon ou sur une partie de son enveloppe.

La surface prismatique permettant d'exercer un couple sur le crayon peut avoir une section transversale différente d'une section hexagonale.

La virole déformable peut être constituée par tout métal pouvant supporter les conditions physiques régnant dans le coeur et présentant simultanément des propriétés de déformabilité assurant un blocage et un démontage du crayon sans exercer des forces ou un couple excessifs.

L'invention s'applique aux grappes de réglage à crayons démontables pour tout réacteur nucléaire refroidi à l'eau légère.

## Revendications

1. Grappe de réglage à crayons démontables comportant un croisillon ou araignée (22) constituée par une pluralité d'ailettes (24) disposées angulairement les unes par rapport aux autres et comprenant chacune au moins un fourreau (27) ayant un alésage (28) borgne et taraudé sur une partie (28a) de sa longueur, dont l'axe correspond à la direction longitudinale de la grappe ainsi qu'un ensemble de crayons cylindriques (23) comportant chacun une partie active et une partie d'extrémité destinée à être engagée et fixée dans l'alésage (28) d'un fourreau (27) de l'araignée et comprenant, dans le prolongement axial d'un bouchon (30) de fermeture de la partie active, une tige (31) filetée sur une partie de sa longueur, assurant le vissage de la tige (31) dans l'alésage (28) du fourreau correspondant, caractérisée par le fait que, pour chacun des crayons démontables (23) :

   - la partie d'extrémité du fourreau (27) ouverte vers l'extérieur présente sur une certaine longueur (27a) un diamètre extérieur réduit et comporte au moins un logement sur sa paroi,
   - la partie d'extrémité du crayon est solidaire d'une virole (34) coaxiale au crayon et entourant la tige (31) sur une partie de sa longueur correspondant à la partie de la tige (31) engagée dans la partie à diamètre réduit (27a) du fourreau (27), la virole (34) ayant un diamètre intérieur sensiblement égal au diamètre réduit du fourreau (27),
   - une surface (37) de prise est prévue sur la surface extérieure du crayon (23),
   le blocage en rotation du crayon (23) dans le fourreau (27) étant assuré par déformation de la virole (34) à l'intérieur des ouvertures (26) de la partie d'extrémité (27a) du fourreau et le démontage, en exerçant un couple sur le crayon (23) par l'intermédiaire de la surface prismatique (37), pour repousser les parties déformées de la virole.

2. Grappe de réglage suivant la revendication 1, caractérisée par le fait que la virole (34) est soudée sur l'extrémité du crayon (23) voisine de la tige (31).

3. Grappe de réglage suivant la revendication 2, caractérisée par le fait que la virole (34) est soudée par point.

4. Grappe de réglage suivant la revendication 1, caractérisée par le fait que la virole (34) est soudée sur le bouchon (30) du crayon (23) adjacent à la tige (31).

**Patentansprüche**

1. Regelspinne (22) mit demontierbaren Stäben, bestehend aus einer Mehrzahl von Armen (24), die winkelmäßig zueinander beabstandet angeordnet sind und jeweils mindestens eine Hülle (27) aufweisen, mit einem Sackloch (28), das auf einem Teil seiner Länge (28a) mit einem Gewinde versehen ist, und dessen Achse der Längsrichtung der Spinne entspricht, sowie einer Gruppe zylindrischer Stäbe (23), die jeweils einen aktiven Bereich und einen Endbereich aufweisen, der dazu bestimmt ist, in die Öffnung (28) der Hülle (27) der Spinne einzugreifen und dort befestigt zu werden, und die in der axialen Verlängerung eines Verschlußstopfens (30) des aktiven Bereichs eine Stange (31) aufweisen, die auf einem Teil ihrer Länge mit einem Gewinde versehen ist und das Verschrauben der Stange (31) in der Bohrung (28) der entsprechenden Hülle gewährleistet,

   **dadurch gekennzeichnet,**

   daß für jeden demontierbaren Stab (23):
   - der Endteil der Hülle (27), der nach außen hin offen ist auf einer gewissen Länge (27a) einen reduzierten Außendurchmesser und mindestens eine Lagerfläche auf seiner Wandung aufweist,
   - der Endbereich des Stabes mit einem zum Stab koaxialen Ring (34) fest verbunden ist, der die Stange(31) auf einem Teil seiner Länge, der dem Teil der Stange (31) entspricht, der in den Bereich der Hülle (27) mit reduziertem Durchmesser eingreift, umgibt, wobei der Ring einen Innendurchmesser hat, der im wesentlichen gleich dem reduzierten Durchmesser der Hülle (27) ist,
   - eine Befestigungsfläche (37) auf der Außenfläche des Stabes (23) vorgesehen ist, wobei die Drehblockierung des Stabes (23) in der Hülle (27) durch eine Verformung des Rings (34) im Inneren der Öffnungen (26) des Endbereiches (27a) der Hülle gewährleistet wird, und die Demontage erfolgt, indem ein Moment auf den Stab (23) über die prismatische Oberfläche (37) ausgeübt wird, um die deformierten Bereiche des Rings auszutreiben.

2. Regelspinne nach Anspruch 1, dadurch gekennzeichnet, daß der Ring (34) auf dem Ende des Stabes (23) in der Nähe der Stange (31) angeschweißt ist.

3. Regelspinne nach Anspruch 2, dadurch gekennzeichnet, daß der Ring (34) punktgeschweißt ist.

4. Regelspinne nach Anspruch 1, dadurch gekennzeichnet, daß der Ring (34) auf den Stopfen (30) des Stabes (23), der angrenzend an die Stange(31) angeordnet ist, geschweißt ist.

**Claims**

1. Control cluster with removable rods comprising a crosspiece or spider (22) consisting of a plurality of blades (24) arranged at an angle to one another and each having at least one sleeve (27) provided with a blind bore (28) and threaded over part (28a) of its length, the axis of which corresponds to the longitudinal direction of the cluster, as well as a set of cylindrical rods (23) each having an active portion and an end portion adapted to be engaged and fixed in the bore (28) of a sleeve (27) of the spider and comprising, on an axial extension of a closure knob (30) of the active portion, a pin (31) threaded over part of its length so that the pin (31) can be screwed into the bore (28) of the corresponding sleeve, characterised in that, for each of the removable rods (23):
   - the outwardly opening end portion of the sleeve (27) has a reduced outer diameter over a certain length (27a) and has at least one recess in its wall,
   - the end portion of the rod is integral with a collar (34) which is coaxial with the rod and surrounds the pin (31) over part of its length corresponding to the part of the pin (31) engaging in the reduced-diameter portion (27a) of the sleeve (27), the collar (34) having an internal diameter which is substantially equal to the reduced diameter of the sleeve (27),
   - a gripping surface (37) is provided on the outer surface of the rod (23),
   - the rod (23) being secured for rotation with the sleeve (27) by deformation of the collar (34) inside the openings (26) in the end portion (27a) of the sleeve and being removable by exerting torque on the rod (23) by means of the prismatic surface (37), in order to push back the deformed areas of the collar.

2. Control cluster according to claim 1, characterised in that the collar (34) is welded to the end of the rod (23) adjacent to the pin (31).

3. Control cluster according to claim 2, characterised in that the collar (34) is attached by spotwelding.

4. Control cluster according to claim 1, characterised in that the collar (34) is welded to the plug (30) of the rod (23) adjacent to the pin (31).

FIG_1

FIG_1A

Z

6

5

2

4

1

7

8b

8a

16

7

13

14

12

15

12

8

11

10

A

A

3

3a

9

Z'

FIG. 2

FIG_4

FIG_3